(19) Europäisches Patentamt
European Patent Office
Office européen des brevets

(11) **EP 2 244 146 A1**

(12) **EUROPÄISCHE PATENTANMELDUNG**

(43) Veröffentlichungstag:
27.10.2010 Patentblatt 2010/43

(51) Int Cl.:
*G05B 19/418* (2006.01)  *H04L 29/12* (2006.01)

(21) Anmeldenummer: **09005664.9**

(22) Anmeldetag: **22.04.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **SIEMENS AKTIENGESELLSCHAFT**
**80333 München (DE)**

(72) Erfinder:
• **Aumer, Albert**
**92260 Ammerthal (DE)**
• **Barthel, Herbert**
**91074 Herzogenaurach (DE)**

• **Gebuhr, Harald**
**90409 Nürnberg (DE)**
• **List, Richard**
**92266 Ensdorf (DE)**
• **Maier, Mario**
**92266 Ensdorf (DE)**
• **Maier, Martin**
**73760 Ostfildern (DE)**
• **Mattes, Rainer**
**90408 Nürnberg (DE)**
• **Schenk, Andreas**
**91052 Erlangen (DE)**
• **Tretter, Albert**
**92712 Pirk (DE)**

(54) **Sicherheitsgerichtetes Automatisierungssystem mit automatischer Adressvergabe**

(57) Die Erfindung betrifft ein industrielles Automatisierungssystem zur Steuerung der Betriebsmittel eines technischen Prozesses, mit fehlersicheren Modulen (CF1, CF2; DF1, DF2) zum Austausch von Prozessdaten mit den Betriebsmitteln, insbesondere von Stell- und Messsignalen, Stationen (C, D) mit über einen Rückwandbus (CR, DR) verbundenen Steckplätzen (CP0-CP5; DP0-DP5) zur Aufnahme der Module, einer Zentraleinheit (H1) zumindest zur Verarbeitung von Prozesssignalen des technischen Prozesses, einer Adress-Prüfeinheit (APH; APP; APA; APB; APC), welche Adressbeziehungen zur eindeutigen datentechnischen Adressierung von Stationen und/oder Modulen, insbesondere bei einer Erstinbetriebnahme, über einen Feldbus (F) von der Zentraleinheit (H1) an die Stationen und/oder innerhalb einer Station über den Rückwandbus an die Module der Station überträgt, und die übertragenen Adressbeziehungen von den Stationen und/oder Modulen als gültig übernommen werden, nachdem diese von der Adress-Prüfeinheit (APH; APP; APA; APB; APC) durch Vergleich mit dem tatsächlichen Bestand an Stationen und/oder Modulen auf Plausibilität überprüft wurden.

EP 2 244 146 A1

**Beschreibung**

Die Erfindung betrifft ein industrielles Automatisierungssystem zur Steuerung der Betriebsmittel eines technischen Prozesses.

Bei einem sicherheitsgerichteten vernetzten Automatisierungssystem werden Daten zwischen zumindest einer sicherheitsgerichteten Zentraleinheit und Feldgeräten so übertragen, dass die zeitliche und inhaltliche Konsistenz der Daten zur Absicherung gegen Verfälschung gewährleistet ist. Dabei kann es sich sowohl um die Absicherung gegen die Gefährdung von Personen, aber auch um die Anlagensicherheit handeln. Dabei werden fehlersichere Feldbussysteme eingesetzt, welche Daten in einer fehlersicheren Weise zwischen entsprechend fehlersicheren Komponenten austauschen, oder Fehler in einer sicheren Weise erkennen können, z.B. mit einer Restfehlerrate kleiner als $10^{-9}$ pro Stunde bzw. entsprechend der Spezifikation SIL3 für den Kommunikationsanteil. Standards für solche Feldbussysteme sind insbesondere die IEC 61508, 61784-3, EN 954-1 und EN 13849-1. Sicherheitsgerichtete vernetzte Automatisierungssysteme dieser Art werden typischerweise eingesetzt in der Fabrikautomation und Prozessautomatisierung, z.B. der Automobilfertigung/ Maschinen- und Anlagenbau, oder der Transporttechnik, z.B. bei Bahnen/Seilbahnen.

In einem sicherheitsgerichteten Feldbussystem müssen vor allem Fehler der Adressierung der im Bussystem verteilten Komponenten mit hohem Aufdeckungsgrad erkannt werden, so dass bei Vorhandensein eines Fehlers sicherheitsgerichtet reagiert werden kann. Als Komponenten sind insbesondere fehlersichere Module und Stationen in einem oder mehreren Subnetzen des Feldbussystems zusammengeschaltet, und werden über eine fehlersichere Zentraleinheit angesteuert, insbesondere eine fehlersichere sicherheitsgerichtete speicherprogrammierbare Steuerung. Dabei stellen die Module die Schnittstellen zu den Betriebsmitteln eines technischen Prozesses dar, besonders zu den verteilt angeordneten Aktoren und Sensoren. Je nach Art und Ausstattung der Betriebsmittel müssen diesen ein oder mehrere Module unterschiedlichen Typs zugeordnet werden. So stehen Module z.B. mit digitalen oder analogen Eingängen, mit digitalen oder analogen Ausgängen, Mischmodule mit digitalen und analogen Ein- bzw. Ausgängen, Module mit unterschiedlichen Anzahlen von Eingangs- bzw. Ausgangkanälen bzw. verschiedenen Ein- und/oder Ausgangsspannungsbereichen u.v.m. zur Verfügung. Über die Module werden von der Zentraleinheit des Automatisierungssystems erzeugte Stellsignale an den technischen Prozess ausgegeben bzw. dort anfallende Messsignale eingelesen, d.h. Prozessdaten ausgetauscht. In Ergänzung stellen Stationen eine Vielzahl von Steckplätzen zur Aufnahme von Modulen bereit und können als Einschubgehäuse ausgeführt sein. Jede Station ist mit einem Stationskopf zum Anschluss an den Feldbus ausgerüstet. Darüber kann jedes in einer Station gesteckte Modul Daten mit einer fehlersicheren Zentraleinheit austauschen.

Weiterhin können Gruppen von Stationen in Subnetzen zusammengeschaltet sein, die bezüglich eines technischen Prozesses jeweils eine technologische Einheit bilden und von einer Zentraleinheit verwaltet werden. Diese stellt eine übergeordnete Verarbeitungseinheit dar, insbesondere eine fehlersichere speicherprogrammierbare Steuerung, welche mit Hilfe von Feldbusmastern den Datenaustausch mit verschiedenen Subnetzen organisiert. Der Datenaustausch zwischen Zentraleinheit und den Stationen bzw. Modulen in den Subnetzen erfolgt in der Regel mit Hilfe eines speziellen fehlersicheren Kommunikationsprotokolls, z.B. PROFIsafe nach IEC61784-3-3. Ein Subnetz kann als Teil des gesamten Netzes sowie auch als eigener Adressraum angesehen werden, in dem jeder Station und jedem Modul eine eindeutige Adresse zum Datenaustausch über den Feldbus zugewiesen ist. Diese Adressen sind ein relevanter Teil der Projektierdaten des jeweiligen Subnetzes. Sie werden u.a. in der fehlersicheren Zentraleinheit verwaltet und nachfolgend als Adressbeziehungen bezeichnet. Dabei kommt in einem fehlersicheren Automatisierungssystem der Adressbeziehung eines jeden Moduls eine besondere Bedeutung zu. Hierunter wird die komplette Adresshierarchie verstanden, womit ein Modul in einem bestimmten Netz von der Zentraleinheit über den Feldbus datentechnisch erreichbar ist.

Eine solche Adressbeziehung umfasst somit zumindest die exakte topologische Adresse eines Moduls innerhalb des jeweiligen Subnetzes und die Adresse der übergeordneten Zentraleinheit. Weiterhin können in einer Adressbeziehung auch eine Kennung des jeweiligen Modultyps und gegebenenfalls eine zusätzliche Signatur enthalten sein. Zur Aufdeckung von Transfer und Speicherfehlern kann über die Adressbeziehung eine Signatur errechnet und zusätzlich in der Adressbeziehung gespeichert werden. Die topologische Adresse eines Moduls umfasst zumindest die Adresse der Station, welche das Modul enthält, und die Adresse des Steckplatzes des Moduls in der jeweiligen Station. Zusätzlich kann die Adressbeziehung auch die Subnetzadresse der zugehörigen Station enthalten, sofern einige Stationen am Feldbus zu unterschiedlichen Subnetzen gruppiert sind. Die Adressbeziehung eines Moduls ist sowohl in einem remanenten Speicher im jeweiligen Modul selbst als auch in der Zentraleinheit gespeichert. Die Richtigkeit der Adressbeziehung wird durch das von der Zentraleinheit ausgeführte fehlersichere Kommunikationsprotokoll bei jeder Datenübertragung geprüft. Zusammenfassend gilt z.B.:

```
Adressbeziehung Modul = Topologische Adresse Modul +

Adresse Zentraleinheit + ( Modulkennung + Signatur);


Topologische Adresse Modul = ( Subnetzadresse + ) Sta-

tionsadresse + Steckplatzadresse;
```

wobei das Symbol "+" hier als eine Aneinanderreihung von Adressdaten zu verstehen ist.

Eine fehlerfreie Vergabe der Adressbeziehungen in einem vernetzten Automatisierungssystem ist insbesondere bei einer Erstinbetriebnahme, aber auch bei einer erneuten Initialisierung des Systems, z.B. nach Überwindung eines Netzspannungsausfalls erforderlich. Vor Aufnahme oder Wiederaufnahme eines sicherheitsgerichteten Betriebs müssen in jedem Falle bei der Vergaben der Adressbeziehungen möglicherweise aufgetretene Fehler sicher aufgedeckt und behoben worden sein. Dabei kommt natürlich einer Erstinbetriebnahme eine besondere Bedeutung zu, da hierbei eine erstmalige, umfassende Adressierung aller Komponenten erfolgt. Eine solche Inbetriebnahme muss von erfahrenem Personal vorgenommen werden, welches hierbei auch auf technische Hilfsmittel zurückgreift. So ist bei einer Erstinbetriebnahme in der Regel ein "Programmier- und Projektiergerät" (PG) an dem Automatisierungssystem angeschlossen und kann zur Unterstützung der sicheren Adressvergabe und einer eventuellen Fehlersuche genutzt werden. Nach Abschluss der Inbetriebnahme und dem Test der Sicherheitsfunktionen, z.B. mittels eines Loop Tests, kann die Anlage in den sicheren Betrieb gehen

Bei der Projektierung eines sicherheitsgerichteten Automatisierungssystems wird die individuelle Anlagenkonfiguration, d.h. die jeweils physikalisch vorliegende Schaltung aller Komponenten, z.B. Feldbuskomponenten, Feldbus-Subnetze, Stationen, und Module mit den daran angeschlossenen Sensoren und Aktoren, vorzugsweise mittels einer Projektiersoftware in ein Projektiersystem abgebildet. Es liegt dann ein Projektierungsdatensatz vor, der vom Projektiersystem in die zugehörige Zentraleinheit, Host genannt, geladen werden kann. Bei einer solchen Projektierung müssen besonders die Adressbeziehungen aller Komponenten der Anlage definiert werden. Diese sind notwendig, um einen fehlerfreien Datenaustausch zwischen der Zentraleinheit und den Komponenten über den Feldbus zu ermöglichen, also die Betriebsfähigkeit des sicherheitsgerichteten Automatisierungssystems herzustellen. Bei den Adressbeziehungen handelt es sich besonders um die topologischen Adressen der Subnetze, Stationen und Module der Anlage. Gegebenenfalls werden die Adressbeziehungen mit der Adresse der jeweiligen Zentraleinheit und mit technologischen Kennwerten der einzelnen Module ergänzt.

Der Erfindung liegt die Aufgabe zu Grunde ein Automatisierungssystem anzugeben, welches eine fehlerfreie, weitgehend automatische Vergabe der Adressbeziehungen der Komponenten in einem vernetzten Automatisierungssystem insbesondere bei einer Initialisierung des Systems ermöglicht. Darüber hinaus sollen dabei auftretende, nicht automatisch auflösbare Adresskonflikte bzw. diese hervorgerufene Inbetriebnahmefehler für einen Anwender zumindest sicher aufgedeckt werden.

Die Aufgabe wird gelöst mit dem in Anspruch 1 angegebenen Automatisierungssystem. Vorteilhafte weitere Ausführungen der Erfindung sind in den Unteransprüchen angegeben.

Erfindungsgemäß werden die im jeweiligen Projektierungsdatensatz vorgegebenen Adressbeziehungen mit dem tatsächlichen Bestand an Stationen und Modulen in der real ausgebauten Anlage verglichen, bevor die mit den Projektierungsdaten übertragenen Adressbeziehungen von den Stationen und Modulen als gültig übernommen werden. Erst wenn eine Plausibilität zwischen dem tatsächlichen Aufbau der Anlage sowohl bezüglich der Topologie als auch der Art und Steckplatznummer der eingesetzten Module und den Vorgaben im Projektierungsdatensatz sichergestellt ist, werden die angebotenen Adressbeziehungen von den Stationen und Modulen in deren interne Speicher übernommen und stehen zur aktiven Datenübertragung bereit.

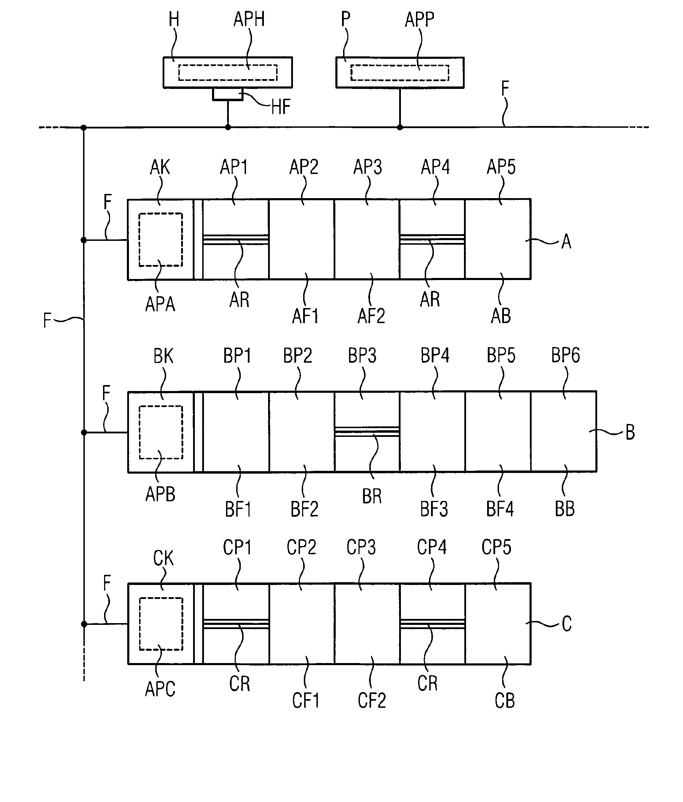

Dabei zeigt die Figur die Topologie eines beispielhaften sicherheitsgerichteten Automatisierungssystems gemäß der Erfindung. Dieses weist eine fehlersichere Zentraleinheit H auf, die auch als Host bezeichnet wird. Diese tauscht bevorzugt über einen Feldbusmaster HF und einen vernetzten Feldbus F Prozessdaten mit einem nicht näher dargestellten technischen Prozess aus. Dabei ist in der Figur der Feldbus F ohne detaillierte Einzelkomponenten nur symbolisch dargestellt. Zur Ermöglichung dieses Datenaustausches sind an den Feldbus F beispielhaft drei Stationen A, B, C datentechnisch angekoppelt, welche jeweils eine Vielzahl von Steckplätzen zur Aufnahme von Modulen bereitstellen. Aus Gründen der Übersicht sind keine Signalkabel zur Verbindung der Module mit den Betriebsmitteln des technischen Prozesses gezeigt. In Fig. 1 ist die beispielhafte Station A über einen Stationskopf AK datentechnisch nach außen mit dem Feldbus F und intern mit einem Rückwandbus AR verbunden. Die Station A stellt exemplarisch fünf Steckplätze AP1 - AP5 zur Aufnahme von Modulen bereit, durch die der Rückwandbus AR hindurchgeschleift ist. Im Beispiel der Fig. 1 sind die Steckplätze AP2, AP3 mit fehlersicheren Modulen AF1, AF2 und der Steckplatz AP5 mit einem Busabschlussmodul AB belegt, während die Steckplätze AP1, AP4 frei sind. In vergleichbarer Weise ist die Station B über einen Stationskopf BK datentechnisch nach außen mit dem Feldbus F und intern mit einem Rückwandbus BR verbunden. Die Station B stellt exemplarisch sechs Steckplätze BP1 - BP6 zur Aufnahme von Modulen bereit, durch die der Rückwandbus BR hindurchgeschleift ist. Im Beispiel der Fig. 1 sind dabei die Steckplätze BP1, BP2, BP4, BP5 mit fehlersicheren Modulen BF1 bis BF4 und der Steckplatz BP6 mit einem Busabschlussmodul BB belegt, während der Steckplatz BP3 frei ist. Schließlich stellt die Station C exemplarisch fünf Steckplätze CP1 - CP5 zur Aufnahme von Modulen bereit, durch die der Rückwandbus AR hindurchgeschleift ist. Im Beispiel der Fig. 1 sind dabei die Steckplätze CP2, CP3 mit fehlersicheren Modulen CF1, CF2 und der Steckplatz CP5 mit einem Busabschlussmodul AB belegt, während die Steckplätze CP1, CP4 frei sind. Die Station C weist somit eine zur Station A grundsätzlich übereinstimmende Topologie auf.

Jeder Station und jedem Modul ist eine eigene Adressbeziehung zugeordnet, welche einen sicheren Datenaustausch mit der Zentraleinheit H über den Feldbus F ermöglicht. In den Adressbeziehungen sind die Zuordnung der Stationen A, B, C zum Feldbussystem H und die topologische Platzierung der Steckplätze einer jeden Station im Feldbussystem H kodiert. Vorteilhaft können weitere Daten, wie z.B. eine Kennung zur Identifikation des jeweiligen Modultyps bzw. eine Signatur zur Sicherstellung einer fehlerfreien Übertragung der Adressbeziehung hinterlegt sein. Die umfassende hierarchische Adressbeziehung einer jeden Station und eines jeden Moduls wird remanent, d.h. netzausfallsicher, gesichert. Hierzu sind in der Regel auf Stationsebene und in jedem Modul unabhängige Speicher vorhanden. Der vollständige Satz an Adressbeziehungen steht nach Abschluss einer Projektierung des Automatisierungssystems als ein wesentlicher Bestandteil der Projektierungsdaten für eine Erstinbetriebnahme des sicherheitsgerichteten Automatisierungssystems bereit. Bei einer solchen Erstinbetriebnahme werden von der Zentraleinheit zunächst die Projektierdaten, d.h. besonders die enthaltenen Adressbeziehungen, über den Feldbus datentechnisch an die Komponenten der Anlage verteilt. Adressaten dieser Übertragung sind die am Feldbus oder einem Subnetz angeschlossenen Stationen und die darin gesteckten fehlersicheren Module.

Je nach Ausführung der Erfindung wird eine solche Plausibilitätsprüfung von einzelnen Adress-Prüfeinheiten APA, APB bzw. APC in den Stationen A, B bzw. C, und/oder von einer zentralen Adress-Prüfeinheit APH bzw. APP des sicherheitsgerichteten Automatisierungssystems, welche z.B. in der Zentraleinheit H oder einer separaten Projektierungseinheit P verwaltet wird, vorgenommen. In den Stationen werden die Adress-Prüfeinheiten APA, APB bzw. APC vorteilhaft von den jeweiligen Stationsköpfen AK, BK bzw. CK verwaltet. Dabei gemäß der Erfindung alternativ bzw. kumulativ durchgeführte Nachbarschafts- und Eindeutigkeitsprüfungen werden nachfolgend am Beispiel eines in der Figur gezeigten Automatisierungssystems näher erläutert.

Bei einer ersten, vorteilhaften Ausführung der Erfindung wird z.B. von einer Station eine so genannte Steckplatzprüfung durchgeführt. Eine solche kann auch als Nachbarschaftsprüfung bezeichnet werden. Bei einem solchen Prüfschritt fragt die Station z.B. mit Hilfe eines internen Prüfalgorithmus über den eigenen Rückwandbus ab, ob gemäß den empfangenen Projektierungsdaten die jeweiligen Steckplätze tatsächlich mit entsprechenden Modulen bestückt sind. Im Beispiel der Figur testet also der Kopf AK der Station A über den Rückwandbus AR, ob die Bestückung der Steckplätze AP2, AP3 mit den Modulen AF1, AF2 und die Art der eingesetzten Module konform ist mit den Vorgaben des Projektierungsdatensatzes. Kann diese Prüfung von der Station positiv abgeschlossen werden, so sind die Projektierungsdaten plausibel. Die Erstinbetriebnahme kann abgeschlossen werden, in dem die angebotenen Adressbeziehungen von der Station und den darin gesteckten Modulen als gültig übernommen wird. Vorteilhaft werden dabei die Adressbeziehungen in internen, nicht flüchtigen Speichern der Module und der Station hinterlegt, und stehen auf diese Weise als gültige Daten auch z.B. für wiederholte Prüfroutinen zur Verfügung. Bei einer weiteren Ausführung der Erfindung kann von einer Station eine erweiterte Steckplatzprüfung durchführt werden. Dabei fragt eine Station zusätzlich die Adressbeziehungen auch von benachbarten Stationen ab und vergleicht diese mit dem Inhalt der empfangenen Projektierdaten. Auch dieser Prüfschritt bewirkt eine weitere Verifikation, dass der Ausbau der jeweiligen Anlage tatsächlich mit dem vorliegenden Projektierungsdatensatz korrespondiert. So kann im Beispiel der Figur z.B. die Station A die Stationen B und C abfragen und feststellen, ob die dabei von B, C erhaltenen Adressbeziehung den Vorgaben des Projektierungsdatensatzes entspricht.

Die erfindungsgemäße Plausibilisierung der Adressbeziehungen während einer Inbetriebnahme hat den weiteren Vorteil, dass auf als gültig erkannte Daten auch im laufenden Betrieb der Anlage zurückgegriffen werden kann. Werden z.B. durch eine unsachgemäße Wartung der Anlage Fehler insbesondere bezüglich der Adressbeziehungen von einzelnen Modulen hervorgerufen, so können diese durch Rückgriff auf die plausiblen Adressbeziehungen erkannt und notfalls korrigiert werden.

Gemäß weiterer Ausführungen der Erfindung kann die Plausibilität der projektierten und z.B. bei einer Erstinbetriebnahme automatisch verteilten Adressbeziehungen weiter dadurch erhöht werden, dass eine endgültige Übernahme der Adressbeziehungen erst nach positivem Abschluss zusätzlicher Eindeutigkeitsprüfungen der Adressbeziehungen der Stationen und Modulen erfolgt. Bei einer solchen Eindeutigkeitsprüfung testet die Adress-Prüfeinheit z.B.

mit Hilfe einer Projektiersoftware bei einer Verteilung der Adressbeziehungen im Rahmen einer Erstinbetriebnahme, für welche Stationen die vorgesehenen Adressbeziehungen eindeutig sind.

Eine Eindeutigkeit kann z.B. dann angenommen werden, wenn sich eine Station in ihrem projektierten und realen Ausbau von allen anderen Stationen der gleichen Netzebene unterscheidet. Kriterien hierzu sind z.B. unterschiedliche Modultypen auf gleichen Steckplätzen, unterschiedliche Bestückungen der Steckplätze mit Modulen innerhalb der Stationen. Die Adress-Prüfeinheit fragt somit die tatsächliche Ausstattung einer jeden Station mit Modulen ab bzw. es wird die jeweilige Bestückung durch die Station per Telegramm mitgeteilt. Die Adress-Prüfeinheit kann dann wiederum den tatsächlichen Bestand mit den Vorgaben der Projektierungsdaten vergleichen. Ergibt der Vergleich bezüglich einer Station eine Eindeutigkeit im obigen Sinne, so können mögliche Fehler in den Adressbeziehungen ausgeschlossen werden. Für eine Station dieser Art können die Adressbeziehungen, d.h. insbesondere die Stationsadresse und die Adressen der gesteckten Module, zur permanenten Adresseinstellung automatisch in die jeweiligen permanenten Speicher geladen und freigegeben werden. Solange bei einer solchen Eindeutigkeitsprüfung also von der Adress-Prüfeinheit im Ausbau der Stationen, d.h. bei deren Bestückung mit Modulen, mindestens ein topologisches Unterscheidungskriterium detektierbar ist, kann die automatische Adressübernahme in die remanenten Speicher automatisch zugelassen werden, selbst wenn noch nicht alle Steckplätze einer Station mit vorgesehenen Modulen belegt sind. Zusammengefasst stellt die Adress-Prüfeinheit eine Eindeutigkeit für eine Station dann fest, wenn diese Station unterschiedlich zu anderen Stationen projektiert ist und in der Station zumindest ein Modul gesteckt ist, bei dem der Steckplatz oder der Modultyp im Vergleich zu den anderen Stationen einzigartig ist. Andernfalls kann die Adress-Prüfeinheit keine Eindeutigkeit feststellen, und es können mögliche Adressvertauschungen dieser Stationen in diesem Prüfschritt dann nicht automatisch aufgedeckt werden. So ist z.B. eine versehentliche Zuordnung einer Stationsadresse zu einer identischen Station, welche aber an einem anderen Teil der prozesstechnischen Anlage angeschlossen ist, mit Hilfe der erfindungsgemäßen Eindeutigkeitsprüfung nicht automatisch erkennbar. Eine solche Situation kann z.B. bei dem in der Figur dargestellten Automatisierungssystem bezüglich der Stationen A und C dann auftreten, falls die Module AF1, CF1 bzw. AF2, CF2 identischen Typs sind.

Vorteilhaft bezieht die Adress-Prüfeinheit für die Eihdeutigkeitsprüfung nur solche Stationen ein, für die oder für deren Module noch keine Adressbeziehungen vergeben sind.

Gemäß einer weiteren Ausführung der Erfindung kann in einem solchen Fall die Projektiersoftware die Anforderung einer manuellen Eingabe durch einen Bediener auslösen. Auf diese Weise ist es möglich, die Übereinstimmung einer projektierten Adressbeziehung mit einer tatsächlich vorliegenden Adresszuordnung manuell zu bestätigen. Beispielsweise kann die manuelle Eingabe für ein ausgewähltes Modul in der betroffenen Station angefordert werden, im Beispiel der Figur z.B. dem ersten Modul AF1 der Station A. Hierzu kann die Adress-Prüfeinheit die Station A, für die es die Adresse nicht automatisch vergeben kann, z.B. in einem Topologieeditor anzeigen und gleichzeitig eine Meldesignal vor Ort am Modul AF1 zu Anzeige bringen, z.B. ein Blinksignal. Der Bediener kann nun prüfen, ob die Anzeige im Topologieeditor und die Anzeige vor Ort der tatsächlich projektierten, gewünschten Station zugeordnet sind. In der gleichen Weise könnte auch die identische Station C geprüft werden. Treten hierbei keine Abweichungen auf, d.h. es blinkt das gewünschte Modul in der erwarteten Station, darf der Bediener die manuelle Eingabe vornehmen. Auf diese Weise wird die vorgeschlagene Stationsadresse für das ausgewählte Modul bestätigt. Nun kann die Projektiersoftware auch den weiteren Modulen in dieser Station die jeweiligen Adressbeziehungen automatisch zuweisen. Falls in einem Automatisierungssystem nur ein einziges Paar von identisch aufgebauten Stationen vorliegt, und erfolgte für eine der beiden Stationen die Bestätigung durch den Anwender, dann kann das Projektiersystem auch für die andere Station die Adressbeziehungen sicher vergeben, da diese dann eindeutig sind. Im Beispiel der Figur kann dies auf die Station C zutreffen, falls die Plausibilitätsprüfung für Station A positiv abgeschlossen werden konnte.

Bei einer weiteren Ausführung der Erfindung kann die Plausibilität der projektierten Adressbeziehungen dadurch verbessert werden, dass eine endgültige Übernahme der Adressbeziehungen und ein darauf folgender Übergang in den produktiven Zustand erst nach positivem Abschluss einer zusätzlichen Eindeutigkeitsprüfung der Steckplatzadressen der Module in einer Station erfolgt. Bei einem solchen Prüfschritt fragt eine Station mit Hilfe eines internen Prüfalgorithmus über den eigenen Rückwandbus ab, ob gemäß den Projektierungsdaten innerhalb einer Station die für die jeweiligen Steckplätze vorgesehenen Steckplatzadressen eindeutig sind. Eine Eindeutigkeit kann dann angenommen werden, wenn innerhalb einer Station die Steckplätze im projektierten und tatsächlichen Zustand mit Modulen unterschiedlichen Typs bestückt sind. Zur Prüfung der Eindeutigkeit der Steckplatzadresse eines Moduls stellt also z.B. die Projektiersoftware fest, ob die übrigen in der jeweiligen Station gesteckten Module unterschiedlichen Typs sind, z.B. ob es sich bei dem zu prüfenden Modul um das einzige Eingangsmodul, Ausgangsmodul, Digitalmodul, Analogmodul, 24V - Ausgangssignalmodul, 240V - Ausgangssignalmodul u.s.w. in der Station handelt. Ist dies der Fall, dann sind Verwechslungen ausgeschlossen. Solange also im Ausbau der Station mindestens ein Unterscheidungskriterium erkennbar ist, kann bei der automatischen Adresszuweisung die automatische Adressübernahme in die remanenten Speicher zugelassen werden, auch wenn noch nicht alle Module gesteckt sein sollten. So kann im Beispiel der Figur der Kopf BK der Station B prüfen, ob die gesteckten Module BF1 - BF4 unterschiedlichen Typs sind und ob die vorgefundene Bestückung den Projektierungsdaten entspricht.

Ergibt allerdings die Prüfung, dass z.B. die Station mit zwei typgleichen Modulen bestückt ist, so sind die Steckplatzadressen dieser Module nicht eindeutig. Auch in diesem Falle kann eine mögliche Vertauschung der Module nicht automatisch erkannt werden, d.h. eine fehlerhafte kreuzweise Verbindung mit den falschen Aktoren in einer technischen Anlage. Gemäß einer weiteren Ausführung der Erfindung kann auch in einem solchen Fall die Projektiersoftware die Anforderung einer manuellen Eingabe durch einen Bediener auslösen. So kann bei einer bevorzugten Ausführung z.B. auf einem Bedien- und Beobachtungsgerät oder einem Programmier- und Projektiergerät ein Dialog mit Anzeige desjenigen Moduls ausgegeben werden, für das die Adressbeziehung nicht automatisch sichergestellt werden kann. Auch in diesem Falle muss von einem Bediener praktisch überprüft werden, ob sich das gewünschte Modul auch tatsächlich mit der Adresse des vorgesehenen Steckplatzes meldet. Dies kann wiederum dadurch geprüft werden, dass das in der Station blinkende Modul auch mit dem als nicht automatisch sicher adressierbar angezeigten Modul übereinstimmt. Ist dies nicht der Fall, dann könnte dem Modul auch durch die Station selbst eine falsche Adresse zugewiesen worden sein. So könnte z.B. ein Defekt im Rückwandbus eine korrekte, fehlerfreie adresstechnische Differenzierung der Steckplätze verhindern. Die erfindungsgemäße Eindeutigkeitsprüfung der Steckplatzadressen der Module in einer Station ist besonders dann von Vorteil, wenn eine Station nicht mit internen diversitären Mechanismen ausgestattet ist, z.B. nicht mit einem redundanten Rückwandbus. Bei einer solchen Ausführung kann nicht von einer Fehlerfreiheit bei der automatischen Zuweisung der Steckplatzadressen an die Steckplätze durch den Stationskopf ausgegangen werden. Der Stationskopf kann somit nicht selbstständig automatisch prüfen, ob die in der Projektierung für jedes Modul vorgegebene Steckplatzadresse mit der Adresse des vom jeweiligen Modul im Inneren der Station tatsächlich eingenommenen Steckplatzes übereinstimmt.

## Patentansprüche

**1.**  Industrielles Automatisierungssystem zur Steuerung der Betriebsmittel eines technischen Prozesses, mit

- fehlersicheren Modulen (CF1, CF2; DF1, DF2) zum Austausch von Prozessdaten mit den Betriebsmitteln, insbesondere von Stell- und Messsignalen,
- Stationen (C, D) mit über einen Rückwandbus (CR, DR) verbundenen Steckplätzen (CPO-CP5; DP0-DP5) zur Aufnahme der Module,
- einer Zentraleinheit (H1) zumindest zur Verarbeitung von Prozesssignalen des technischen Prozesses,
- einer Adress-Prüfeinheit (APH; APP; APA; APB; APC), welche Adressbeziehungen zur eindeutigen datentechnischen Adressierung von Stationen und/oder Modulen, insbesondere bei einer Erstinbetriebnahme, über einen Feldbus (F) von der Zentraleinheit (H1) an die Stationen und/oder innerhalb einer Station über den Rückwandbus an die Module der Station überträgt, und
- die übertragenen Adressbeziehungen von den Stationen und/oder Modulen als gültig übernommen werden, nachdem diese von der Adress-Prüfeinheit (APH; APP; APA; APB; APC) durch Vergleich mit dem tatsächlichen Bestand an Stationen und/oder Modulen auf Plausibilität überprüft wurden.

**2.**  Automatisierungssystem nach Anspruch 1, **dadurch gekennzeichnet, dass** die Adressbeziehungen von einer Station und deren Modulen als gültig übernommen werden, nachdem die Adress-Prüfeinheit diese durch Vergleich mit der tatsächlichen Bestückung der Station an Modulen auf Plausibilität überprüft hat.

**3.**  Automatisierungssystem nach Anspruch 1 oder 2, **dadurch gekennzeichnet, dass** die Adressbeziehungen von einer Station und deren Modulen als gültig übernommen werden, nachdem die Adress-Prüfeinheit diese durch Vergleich mit Adressbeziehungen anderer Stationen auf Plausibilität überprüft hat.

**4.**  Automatisierungssystem nach einem der vorangegangenen Ansprüche, **dadurch gekennzeichnet, dass** die Adressbeziehungen von einer Station und deren Modulen als gültig übernommen werden, nachdem die Adress-Prüfeinheit keine weiteren Stationen mit fehlender Eindeutigkeit der Bestückung an Modulen detektiert hat.

**5.**  Automatisierungssystem nach einem der vorangegangenen Ansprüche, **dadurch gekennzeichnet, dass** die Adressbeziehungen von einer Station und deren Modulen nach Eingabe einer manuellen Bestätigung als gültig übernommen werden, falls die Adress-Prüfeinheit eine weiteren Stationen mit fehlender Eindeutigkeit der Bestückung an Modulen detektiert hat.

**6.**  Automatisierungssystem nach Anspruch 5, **dadurch gekennzeichnet, dass** die Adress-Prüfeinheit bei der Station ein Signal zur Vornahme der manuellen Bestätigung auslöst.

**7.** Automatisierungssystem nach Anspruch 6, **dadurch gekennzeichnet, dass** die Adress-Prüfeinheit das Signal bei einem ausgewählten Modul der Station auslöst.

**8.** Automatisierungssystem nach einem der vorangegangenen Ansprüche, **dadurch gekennzeichnet, dass** die Adressbeziehungen von einer Station und den Modulen der Station als gültig übernommen werden, nachdem die Adress-Prüfeinheit eine Bestückung mit Modulen unterschiedlichen Typs detektiert hat.

**9.** Automatisierungssystem nach einem der vorangegangenen Ansprüche, **dadurch gekennzeichnet, dass** die Adress-Prüfeinheit (APH) von der Zentraleinheit (H) verwaltet wird.

**10.** Automatisierungssystem nach einem der vorangegangenen Ansprüche, **dadurch gekennzeichnet, dass** die Adress-Prüfeinheit (APP) von einer Projektierungseinheit (P) verwaltet wird.

**11.** Automatisierungssystem nach einem der vorangegangenen Ansprüche, **dadurch gekennzeichnet, dass** die Adress-Prüfeinheit (APA; APB; APC) einer Station (A;B;C) verwaltet wird, insbesondere vom Stationskopf (AK;BK; CK).

Europäisches
Patentamt

European
Patent Office

Office européen
des brevets

## EUROPÄISCHER RECHERCHENBERICHT

**Nummer der Anmeldung**

EP 09 00 5664

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/093530 A2 (SIEMENS AG [DE]; DANZ MIRKO [DE]; EXTRA JOHANNES [DE]) 6. Oktober 2005 (2005-10-06) | 1-4,8-11 | INV. G05B19/418 H04L29/12 |
| Y | * das ganze Dokument * ----- | 5-7 | |
| X | DE 42 16 242 A1 (LEUZE ELECTRONIC GMBH & CO [DE]) 18. November 1993 (1993-11-18) | 1 | |
| Y | * das ganze Dokument * ----- | 2-11 | |
| Y | US 5 481 750 A (PARISE VITAL A [FR] ET AL) 2. Januar 1996 (1996-01-02) * das ganze Dokument * ----- | 1-11 | |
| X | EP 1 445 675 A2 (ABB PATENT GMBH [DE]) 11. August 2004 (2004-08-11) | 1 | |
| Y | * das ganze Dokument * ----- | 2-11 | |
| X | WO 2004/082243 A1 (ONTARIO LTD 777388 [CA]; RUSU MIRCEA [CA]) 23. September 2004 (2004-09-23) | 1 | |
| Y | * das ganze Dokument * ----- | 2-11 | **RECHERCHIERTE SACHGEBIETE (IPC)** |
| Y | EP 1 331 533 A2 (LUXMATE CONTROLS GMBH [AT] ZUMTOBEL STAFF GMBH [AT]) 30. Juli 2003 (2003-07-30) | 1-4,8-11 | G05B |
| A | * das ganze Dokument * ----- | 5-7 | |
| A | DE 10 2004 007233 B3 (SIEMENS AG [DE]) 19. Mai 2005 (2005-05-19) * das ganze Dokument * ----- | 1-11 | |
| A | EP 1 686 767 A1 (PHOENIX CONTACT GMBH & CO [DE]) 2. August 2006 (2006-08-02) * das ganze Dokument * ----- | 1-11 | |
| A | WO 2004/049624 A1 (SAMSUNG ELECTRONICS CO LTD [KR]) 10. Juni 2004 (2004-06-10) * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| Den Haag | 13. August 2009 | Patsiopoulos, N |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 00 5664

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2009

| Im Recherchenbericht angeführtes Patentdokument | Datum der Veröffentlichung | Mitglied(er) der Patentfamilie | Datum der Veröffentlichung |
|---|---|---|---|
| WO 2005093530 A2 | 06-10-2005 | CN 1938660 A<br>DE 102004015240 A1<br>EP 1730615 A2<br>US 2007198752 A1 | 28-03-2007<br>27-10-2005<br>13-12-2006<br>23-08-2007 |
| DE 4216242 A1 | 18-11-1993 | KEINE | |
| US 5481750 A | 02-01-1996 | KEINE | |
| EP 1445675 A2 | 11-08-2004 | DE 10304526 A1 | 12-08-2004 |
| WO 2004082243 A1 | 23-09-2004 | AU 2003209887 A1<br>US 2007162615 A1<br>US 2004179482 A1 | 30-09-2004<br>12-07-2007<br>16-09-2004 |
| EP 1331533 A2 | 30-07-2003 | DE 10202714 A1<br>NO 20030349 A | 31-07-2003<br>25-07-2003 |
| DE 102004007233 B3 | 19-05-2005 | WO 2005078541 A1<br>US 2008133721 A1 | 25-08-2005<br>05-06-2008 |
| EP 1686767 A1 | 02-08-2006 | AT 377902 T<br>CN 1812424 A<br>DE 102005004265 A1<br>ES 2296232 T3<br>JP 2006211680 A<br>US 2006173955 A1 | 15-11-2007<br>02-08-2006<br>10-08-2006<br>16-04-2008<br>10-08-2006<br>03-08-2006 |
| WO 2004049624 A1 | 10-06-2004 | AU 2003279585 A1<br>CN 1692601 A<br>EP 1566012 A1<br>KR 20040046431 A<br>US 2004139187 A1 | 18-06-2004<br>02-11-2005<br>24-08-2005<br>05-06-2004<br>15-07-2004 |

Für nähere Einzelheiten zu diesem Anhang : siehe Amtsblatt des Europäischen Patentamts, Nr.12/82